# FASCICULE DE BREVET EUROPEEN

(11) **EP 2 438 379 B1**
(45) Date de publication et mention de la délivrance du brevet: **08.08.2018**
(21) Numéro de dépôt: 10734788.2
(22) Date de dépôt: 03.06.2010
(51) Int. Cl.: F25J 3/02, C01B 3/50, C01B 23/00, C01C 1/04, F25J 3/08

(54) **PROCÉDÉ ET APPAREIL DE RÉCUPÉRATION D'ARGON DANS UNE UNITÉ DE SÉPARATION D'UN GAZ DE PURGE DE SYNTHÈSE D'AMMONIAC**
VERFAHREN UND ANLAGE ZUR RÜCKGEWINNUNG VON ARGON IN EINER ABSCHEIDUNGSEINHEIT FÜR EIN SPÜLGAS BEI DER AMMONIAKSYNTHESE
PROCESS AND PLANT FOR RECOVERING ARGON IN A SEPARATION UNIT FOR A PURGE GAS USED IN THE SYNTHESIS OF AMMONIA

(30) Priorité: 05.06.2009 FR 0953730
(43) Date de publication de la demande: 11.04.2012
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); HERNANDEZ, Antoine, 92290 Chatenay Malabry (FR); SAULNIER, Bernard, F-92250 La Garenne Colombes (FR); SAMY, Laurent, F-75010 Paris (FR); TSEVERY, Jean-Marc, F-77127 Lieusaint (FR); VICTOR, Marie-Pascal, F-75018 Paris (FR)
(74) Mandataire: Mercey, Fiona Susan
(86) Numéro de dépôt international: PCT/FR2010/051089
(87) Numéro de publication internationale: WO 2010/139905

(56) Documents cités:
- EP-A1- 0 282 165
- US-A- 3 626 448
- US-A- 3 805 537
- US-A- 3 807 185
- US-A- 4 805 414
- ASAMI T ET AL: "ENERGY CONSUMPTION IN THE RECOVERY OF ARGON FROM PURGE GAS IN AMMONIA SYNTHESIS PLANT", CRYOGENICS, ELSEVIER, KIDLINGTON, GB, vol. 36, no. 12, 1 décembre 1996 (1996-12-01), pages 997-1003, XP000656795, ISSN: 0011-2275

## Description

La présente invention est relative à un procédé et à un appareil de récupération d'argon dans une unité de séparation de gaz de purge de synthèse d'ammoniac.

Une installation classique de production d'ammoniac par reformage de gaz naturel comporte généralement les étapes suivantes :
- désulfuration finale du gaz naturel
- reformage primaire
- postcombustion à l'air avec lequel est introduit l'azote de synthèse
- conversion de CO
- décarbonatation
- méthanisation
- compression
- boucle de synthèse d'ammoniac.

Afin d'éliminer les inertes et éviter qu'ils ne s'accumulent dans le système, la boucle de synthèse d'ammoniac produit un gaz de purge qui contient les composés suivants : H₂, N₂, CH₄, Ar, NH₃. Le mélange est substantiellement libre de monoxyde de carbone mais peut contenir de l'hélium ou pas.

Il peut alors être intéressant de traiter cette purge dans une unité cryogénique pour récupérer d'un coté les composés valorisables dans la boucle de synthèse d'ammoniac et d'un autre coté produire de l'argon sous forme liquide et de le commercialiser.

«Production and Purification of Argon» d'Arregger, Chemical and Process Engineering, octobre 1964, US-A-4338108, «Cryogenic Gas Separation» de Duckett et al., The Chemical Engineer, décembre 1985, «Methods for argon recovery to meet increased demand on the argon market» de Springmann,AIChE Symposium Series 1982, US-A-4762542, «Séparation of Gases» d'Isalski, pp.84-88 et ««Cryogénic Argon Recovery from Ammonia Plant Purge Gas» de Hwang et al., présentée à «Cryogenics and Refrigeration», Hangzhou, 1989 divulguent tous l'usage d'une colonne de lavage à l'azote dans un procédé de séparation cryogénique d'un gaz de purge de synthèse d'ammoniac pour la production d'argon. Cette colonne est généralement suivie par une colonne de séparation argon/méthane et une colonne de séparation azote/argon.

« Energy consumption in the recovery of argon from purge gas in ammonia synthesis plant » d'Asami et al, Cryogenics 1996, Vol 36, No 12, pp 997-1003, US-A-3626448, EP-A-0282165 et US-A-3807185 décrivent un procédé et un appareil selon le préambule des revendications 1 et 7 respectivement. Selon un objet de l'invention, il est prévu un procédé de production d'un débit riche en argon à partir d'un mélange constitué par un fluide de purge d'un appareil de production d'ammoniac et contenant de l'hydrogène, du méthane, de l'azote et de l'argon dans lequel :
i) le mélange est séparé au moins d'au moins un séparateur de phases pour produire au moins un gaz enrichi en hydrogène et un liquide appauvri en hydrogène
ii) au moins une partie du liquide appauvri en hydrogène est envoyé à un élément de séparation pour former un gaz de tête et un liquide de cuve
iii) au moins une partie du liquide de cuve de l'élément de séparation est envoyée à une colonne de séparation de méthane pour produire un liquide de cuve enrichi en méthane et un gaz de tête appauvri en méthane
iv) au moins une partie du gaz de tête appauvri en méthane est envoyée à une colonne de séparation azote/argon pour former un fluide enrichi en azote en tête de colonne et un liquide riche en argon en cuve de colonne servant de produit caractérisé en ce que l'élément de séparation est une colonne de lavage au méthane, le liquide de cuve de l'élément de séparation envoyé à la colonne de séparation de méthane est un liquide de cuve de la colonne de lavage au méthane, l'au moins une partie du liquide appauvri en hydrogène est envoyé en cuve de la colonne de lavage et au moins une partie du liquide de cuve enrichi en méthane est envoyée en tête de la colonne de lavage au méthane.

Selon d'autres caractéristiques optionnelles :
- l'étape i) comprend la séparation du mélange en au moins deux séparateurs de phases en série, le liquide du premier séparateur étant détendu et envoyé au deuxième séparateur et le liquide du deuxième séparateur formant le fluide d'alimentation en cuve de la colonne de lavage au méthane, chaque séparateur de phases produisant un gaz enrichi en hydrogène ;
- le premier séparateur de phase produit un gaz enrichi en hydrogène à pression plus élevée que le deuxième séparateur de phases ;
- le liquide enrichi en méthane est pressurisé en amont de la colonne de lavage au méthane ;
- le procédé est tenu en froid au moins partiellement par un cycle d'azote ;
- le fluide de purge est dépourvu d'hélium.

Selon un autre objet de l'invention, il est prévu un appareil de production d'un débit riche en argon à partir d'un mélange constitué par un fluide de purge d'un appareil de production d'ammoniac et contenant de l'hydrogène, du méthane, de l'azote et de l'argon comprenant au moins un séparateur de phases, une colonne de lavage au méthane, un élément de séparation, une colonne de séparation azote/argon, une conduite pour envoyer le mélange dans l'au moins un séparateur de phases pour produire au moins un gaz enrichi en hydrogène et un liquide appauvri en hydrogène, une conduite pour envoyer au moins une partie du liquide appauvri en hydrogène à l'élément de séparation pour former un gaz de tête et un liquide de cuve, une conduite pour envoyer au moins une partie du liquide de l'élément de séparation à la colonne de séparation de méthane pour produire un liquide de cuve enrichi en méthane et un gaz de tête appauvri en méthane, une conduite pour envoyer au moins une partie du gaz de tête appauvri en méthane à la colonne de séparation azote/argon pour former un fluide enrichi en azote en tête de colonne, une conduite pour soutirer un liquide riche en argon en cuve de colonne servant de produit caractérisé en ce que l'élément de séparation est une colonne de lavage au méthane, la conduite pour envoyer au moins une partie du liquide de cuve de l'élément de séparation à la colonne de séparation de méthane est reliée à la cuve de la colonne de lavage au méthane, la conduite pour envoyer au moins une partie du liquide appauvri en hydrogène à l'élément de séparation est reliée à la cuve de la colonne de lavage au méthane et l'appareil comprend une conduite pour envoyer au moins une partie du liquide de cuve enrichi en méthane en tête de la colonne de lavage au méthane.

En option, l'appareil comprend :
- au moins deux séparateurs de phases en série, une vanne pour détendre le liquide du premier séparateur, une conduite pour envoyer le liquide du premier séparateur à la vanne, une conduite pour envoyer le liquide détendu de la vanne au deuxième séparateur et une conduite pour envoyer le liquide du deuxième séparateur formant le fluide d'alimentation en cuve de la colonne de lavage au méthane et des conduites pour soutirer un gaz enrichi en hydrogène de chaque séparateur de phases ;
- un rebouilleur de cuve pour la colonne de séparation azote/argon ;
- un rebouilleur de cuve pour la colonne de séparation de méthane ;
- un condenseur de tête pour la colonne de séparation de méthane ;
- aucun condenseur de tête pour la colonne de séparation azote/argon ;
- aucun rebouilleur de cuve pour la colonne de lavage au méthane ;
- des moyens de pressurisation du liquide enrichi en méthane en amont de la colonne de lavage au méthane ;
- un cycle d'azote, par exemple pour assurer le rebouillage d'au moins une des colonnes et/ou le refroidissement du condenseur de tête de la colonne de séparation azote/argon.

L'invention consiste à utiliser une colonne de lavage au méthane à relativement basse pression pour pouvoir à la fois abaisser la teneur d'hydrogène dans la phase liquide de cuve de colonne et ainsi abaisser la teneur d'hydrogène dans le cycle azote et également d'augmenter le rendement de récupération d'argon dans la phase liquide et donc de l'ensemble de l'unité (augmentation de rendement autour de 5%).

Il a été découvert qu'un lavage au méthane était plus efficace qu'un lavage à l'azote et évite également d'envoyer de l'azote dans le gaz de tête de la colonne à l'extérieur.

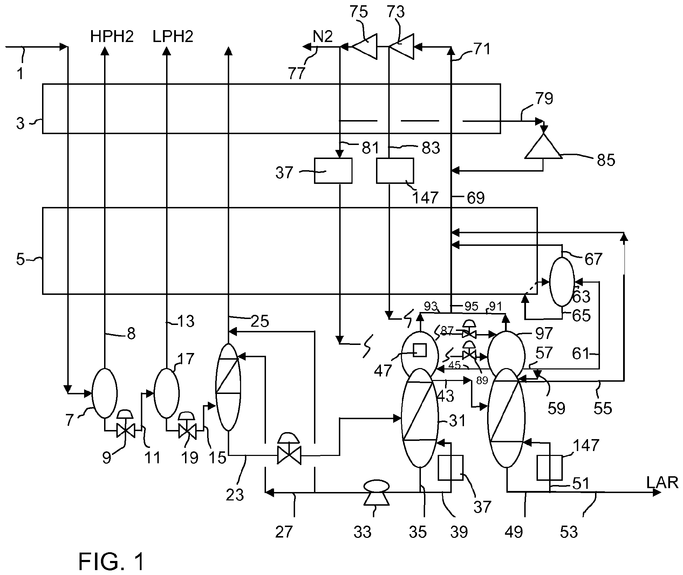

L'invention sera décrite en plus de détails en se référant à la figure qui illustre un appareil selon l'invention.

Un mélange d'hydrogène, de monoxyde de carbone, de méthane, d'azote et d'argon 1, sensiblement sans monoxyde de carbone et de préférence sensiblement sans hélium, se refroidit dans un premier échangeur de chaleur 3 et ensuite dans un deuxième échangeur de chaleur 5 où il se condense partiellement. Le débit condensé partiellement est envoyé dans un premier séparateur de phases 7. Le gaz 8 du premier séparateur de phases, enrichi en hydrogène, est envoyé aux deux échangeurs 5,3 pour s'y réchauffer. Le liquide du premier séparateur de phases est détendu dans une vanne 9 pour se vaporiser partiellement et le débit partiellement vaporisé 11 est envoyé dans un deuxième séparateur de phases 17. Le gaz 13 du deuxième séparateur de phases, enrichi en hydrogène, est envoyé aux deux échangeurs 5,3 pour s'y réchauffer. Le liquide du premier séparateur de phases est détendu dans une vanne 19 pour se vaporiser partiellement et le débit partiellement vaporisé 15 est envoyé à la cuve d'une colonne de lavage au méthane 21 alimentée en tête par un débit de méthane liquide 27.

Le gaz de tête de la colonne de lavage au méthane est mélangé avec un débit 29 pour former le débit 25 et le débit 25 se réchauffe dans les deux échangeurs 5,3 pour former un gaz carburant. Le liquide de cuve 23 est détendu dans une vanne puis envoyé à un niveau intermédiaire d'une colonne de séparation de méthane 31. Le liquide de cuve 35 de cette colonne 31 est pressurisé par une pompe 33 et envoyé en partie (débit 27) en tête de la colonne de lavage 21 et en partie (débit 29) mélangé avec le gaz de tête de la colonne de lavage. La colonne 31 a un rebouilleur de cuve 37 alimenté par un débit de cuve 39 de la colonne 31. La colonne 31 a également un condenseur de tête 47 où se condense le gaz de tête enrichi en azote et en argon. Un débit de gaz de tête 43 est envoyé à un niveau intermédiaire de la colonne 41. La colonne 41 a un rebouilleur de cuve 147 et un stockage d'azote de tête 97. Le liquide de cuve 49 est envoyé en partie (débit 51) au rebouilleur de cuve 147 et le reste 53 sert le produit liquide riche en argon. Le gaz de tête 55 de la colonne 41 riche en azote est envoyé à un niveau intermédiaire de l'échangeur 5.

Un cycle d'azote assure le rebouillage des colonnes 31,41 et le refroidissement du condenseur de tête 47 et apporte le refroidissement de la tête de la colonne 41 par reflux direct. De l'azote 71 est comprimé dans un compresseur 73 et divisé en deux. Une partie est envoyée au compresseur 75 pour former le produit d'azote haute pression 77 et un débit de cycle haute pression. Le débit de cycle se refroidit jusqu'à une température intermédiaire de l'échangeur 3 puis est divisé en deux. Une partie 1 sert à chauffer le rebouilleur 37 puis est envoyée au stockage à travers la vanne 89. Une autre partie 79, à une température intermédiaire de l'échangeur 3, est détendue dans une turbine 85 et mélangée au débit 69 pour former le débit 71. L'azote du compresseur 73 sert à rebouillir le rebouilleur 147 en tant que débit 83, puis est détendu par la vanne 87 et envoyé au stockage 97. Le liquide du stockage est soutiré en deux débits, un débit 47 étant envoyé au condenseur de tête 47 et l'autre débit 57 étant en partie (59) renvoyé à la colonne 41 et en partie (61) envoyé à un séparateur de phases 63. Le gaz du séparateur de phases est mélangé aux débits 93,91 venant respectivement du condenseur de tête 47 et du stockage 97. Ce débit mélangé se réchauffe dans l'échangeur 5, se mélange avec le débit 55 et forme le débit 69. Le liquide 65 du séparateur de phases 63 se réchauffe dans l'échangeur 5.

Le premier séparateur de phases 7 peut être remplacé par une colonne de lavage à l'azote. Eventuellement le procédé peut comprendre un seul séparateur de phases en amont de la colonne 21 mais les performances seront moins bonnes.

## Revendications

1. Procédé de production d'un débit riche en argon à partir d'un mélange constitué par un fluide de purge d'un appareil de production d'ammoniac et contenant de l'hydrogène, du méthane, de l'azote et de l'argon dans lequel :
i) le mélange est séparé au moins d'au moins un séparateur de phases (7,17) pour produire au moins un gaz enrichi en hydrogène et un liquide appauvri en hydrogène
ii) au moins une partie du liquide appauvri en hydrogène est envoyé à un élément de séparation (21) pour former un gaz de tête et un liquide de cuve
iii) au moins une partie du liquide de cuve de l'élément de séparation est envoyée à une colonne de séparation de méthane (31) pour produire un liquide de cuve enrichi en méthane et un gaz de tête appauvri en méthane
iv) au moins une partie du gaz de tête appauvri en méthane est envoyée à une colonne de séparation azote/argon (41) pour former un fluide enrichi en azote en tête de colonne et un liquide riche en argon en cuve de colonne servant de produit
**caractérisé en ce que** l'élément de séparation est une colonne de lavage au méthane, le liquide de cuve de l'élément de séparation envoyé à la colonne de séparation de méthane est un liquide de cuve de la colonne de lavage au méthane, l'au moins une partie du liquide appauvri en hydrogène est envoyé en cuve de la colonne de lavage et au moins une partie du liquide de cuve enrichi en méthane est envoyée en tête de la colonne de lavage au méthane.

2. Procédé selon la revendication 1 dans lequel l'étape i) comprend la séparation du mélange en au moins deux séparateurs de phases en série, le liquide du premier séparateur (7) étant détendu et envoyé au deuxième séparateur (17) et le liquide du deuxième séparateur formant le fluide d'alimentation en cuve de la colonne de lavage au méthane (21), chaque séparateur de phases produisant un gaz enrichi en hydrogène.

3. Procédé selon la revendication 2 dans lequel le premier séparateur de phase (7) produit un gaz enrichi en hydrogène à pression plus élevée que le deuxième séparateur de phases (17).

4. Procédé selon l'une des revendications précédentes dans lequel le liquide enrichi en méthane est pressurisé en amont de la colonne de lavage au méthane (21).

5. Procédé selon l'une des revendications précédentes tenu en froid au moins partiellement par un cycle d'azote.

6. Procédé selon l'une des revendications précédentes dans lequel le fluide de purge est dépourvu d'hélium.

7. Appareil de production d'un débit riche en argon à partir d'un mélange constitué par un fluide de purge d'un appareil de production d'ammoniac et contenant de l'hydrogène, du méthane, de l'azote et de l'argon comprenant au moins un séparateur de phases (7,17), un élément de séparation (21), une colonne de séparation de méthane (31), une colonne de séparation azote/argon (41), une conduite pour envoyer le mélange dans l'au moins un séparateur de phases pour produire au moins un gaz enrichi en hydrogène et un liquide appauvri en hydrogène, une conduite pour envoyer au moins une partie du liquide appauvri en hydrogène à l'élément de séparation (21) pour former un gaz de tête et un liquide de cuve, une conduite pour envoyer au moins une partie du liquide de cuve de l'élément de séparation à la colonne de séparation de méthane pour produire un liquide de cuve enrichi en méthane et un gaz de tête appauvri en méthane, une conduite pour envoyer au moins une partie du gaz de tête appauvri en méthane à la colonne de séparation azote/argon pour former un fluide enrichi en azote en tête de colonne, une conduite pour soutirer un liquide riche en argon en cuve de colonne servant de produit **caractérisé en ce que** le élément de séparation est une colonne de lavage au méthane, la conduite pour envoyer au moins une partie du liquide de cuve de l'élément de séparation à la colonne de séparation de méthane est reliée à la cuve de la colonne de lavage au méthane, la conduite pour envoyer au moins une partie du liquide appauvri en hydrogène à l'élément de séparation est reliée à la cuve de la colonne de lavage au méthane et l'appareil comprend une conduite pour envoyer au moins une partie du liquide de cuve enrichi en méthane en tête de la colonne de lavage au méthane.

8. Appareil selon la revendication 7 comprenant au moins deux séparateurs de phases en série (7,17), une vanne (9) pour détendre le liquide du premier séparateur (7), une conduite pour envoyer le liquide du premier séparateur à la vanne, une conduite pour envoyer le liquide détendu de la vanne au deuxième séparateur (17) et une conduite pour envoyer le liquide du deuxième séparateur formant le fluide d'alimentation en cuve de la colonne de lavage au méthane (21) et des conduites pour soutirer un gaz enrichi en hydrogène de chaque séparateur de phases.

9. Appareil selon la revendication 7 ou 8 comprenant des moyens de pressurisation (33) du liquide enrichi en méthane en amont de la colonne de lavage au méthane.

10. Appareil selon l'une des revendications 7 à 9 comprenant un cycle d'azote.

## Patentansprüche

1. Verfahren zur Erzeugung eines argonreichen Stroms ausgehend von einem Gemisch, das aus einem Spülfluid einer Ammoniakerzeugungsvorrichtung besteht und Wasserstoff, Methan, Stickstoff und Argon enthält, wobei:
i) das Gemisch mindestens von mindestens einem Phasentrenner (7, 17) getrennt wird, um mindestens ein wasserstoffangereichertes Gas und eine wasserstoffabgereicherte Flüssigkeit zu erzeugen,
ii) mindestens ein Teil der wasserstoffabgereicherten Flüssigkeit zu einem Trennelement (21) geleitet wird, um ein Kopfgas und eine Sumpfflüssigkeit zu bilden,
iii) mindestens ein Teil der Sumpfflüssigkeit aus dem Trennelement zu einer Methantrennkolonne (31) geleitet wird, um eine methanangereicherte Sumpfflüssigkeit und ein methanabgereichertes Kopfgas zu erzeugen,
iv) mindestens ein Teil des methanabgereicherten Kopfgases zu einer Stickstoff-/Argon-Trennkolonne (41) geleitet wird, um ein stickstoffangereichertes Fluid im Kolonnenkopf und eine argonreiche Flüssigkeit im Kolonnensumpf zu bilden, welche als Produkt dient,
**dadurch gekennzeichnet, dass** das Trennelement eine Methanwaschkolonne ist, die zur Methantrennkolonne geleitete Sumpfflüssigkeit aus dem Trennelement eine Sumpfflüssigkeit aus der Methanwaschkolonne ist, der mindestens eine Teil der wasserstoffabgereicherten Flüssigkeit in den Sumpf der Waschkolonne geleitet wird, und mindestens ein Teil der methanangereicherten Sumpfflüssigkeit in den Kopf der Methanwaschkolonne geleitet wird.

2. Verfahren nach Anspruch 1, wobei der Schritt i) das Trennen des Gemischs in mindestens zwei Phasentrennern in Reihe umfasst, wobei die Flüssigkeit aus dem ersten Trenner (7) entspannt und zum zweiten Trenner (17) geleitet wird, und die Flüssigkeit aus dem zweiten Trenner das Beschickungsfluid im Sumpf der Methanwaschkolonne (21) bildet, wobei jeder Phasentrenner ein wasserstoffangereichertes Gas erzeugt.

3. Verfahren nach Anspruch 2, wobei der erste Phasentrenner (7) ein wasserstoffangereichertes Gas auf höherem Druck erzeugt als der zweite Phasentrenner (17).

4. Verfahren nach einem der vorstehenden Ansprüche, wobei die methanangereicherte Flüssigkeit stromaufwärts der Methanwaschkolonne (21) mit Druck beaufschlagt wird.

5. Verfahren nach einem der vorstehenden Ansprüche, das mindestens teilweise über einen Stickstoffzyklus kalt gehalten wird.

6. Verfahren nach einem der vorstehenden Ansprüche, wobei das Spülfluid frei von Helium ist.

7. Vorrichtung zur Erzeugung eines argonreichen Stroms ausgehend von einem Gemisch, das aus einem Spülfluid einer Ammoniakerzeugungsvorrichtung besteht und Wasserstoff, Methan, Stickstoff und Argon enthält, umfassend mindestens einen Phasentrenner (7,17), ein Trennelement (21), eine Methantrennkolonne (31), eine Stickstoff-/Argon-Trennkolonne (41), eine Leitung, um das Gemisch in den mindestens einen Phasentrenner zu leiten, um mindestens ein wasserstoffangereichertes Gas und eine wasserstoffabgereicherte Flüssigkeit zu erzeugen, eine Leitung, um mindestens einen Teil der wasserstoffabgereicherten Flüssigkeit zum Trennelement (21) zu leiten, um ein Kopfgas und eine Sumpfflüssigkeit zu bilden, eine Leitung, um mindestens einen Teil der Sumpfflüssigkeit aus dem Trennelement zur Methantrennkolonne zu leiten, um eine methanangereicherte Sumpfflüssigkeit und ein methanabgereichertes Kopfgas zu erzeugen, eine Leitung, um mindestens einen Teil des methanabgereicherten Kopfgases zur Stickstoff-/Argon-Trennkolonne zu leiten, um ein stickstoffangereichertes Fluid im Kopf der Kolonne zu bilden, eine Leitung, um eine argonreiche Flüssigkeit am Kolonnensumpf abzuziehen, welche als Produkt dient, **dadurch gekennzeichnet, dass** das Trennelement eine Methanwaschkolonne ist, die Leitung, um mindestens einen Teil der Sumpfflüssigkeit aus dem Trennelement zur Methanwaschkolonne zu leiten mit dem Sumpf der Methanwaschkolonne verbunden ist, die Leitung, um mindestens einen Teil der wasserstoffabgereicherten Flüssigkeit zum Trennelement zu leiten mit dem Supf der Methanwaschkolonne verbunden ist, und die Vorrichtung eine Leitung umfasst, um mindestens einen Teil der methanangereicherten Sumpfflüssigkeit in den Kopf der Methanwaschkolonne zu leiten.

8. Vorrichtung nach Anspruch 7, umfassend mindestens zwei Phasentrenner in Reihe (7,17), ein Ventil (9), um die Flüssigkeit aus dem ersten Trenner (7) zu entspannen, eine Leitung, um die Flüssigkeit aus dem ersten Trenner zum Ventil zu leiten, eine Leitung, um die entspannte Flüssigkeit aus dem Ventil zum zweiten Trenner (17) zu leiten, und eine Leitung, um die Flüssigkeit aus dem zweiten Trenner, die das Beschickungsfluid bildet, in den Sumpf der Methanwaschkolonne (21) zu leiten, und Leitungen, um aus jedem Phasentrenner ein wasserstoffangereichertes Gas abzuziehen.

9. Vorrichtung nach Anspruch 7 oder 8, die Mittel zum Druckbeaufschlagen (33) der methanangereicherten Flüssigkeit stromaufwärts der Methanwaschkolonne umfasst.

10. Vorrichtung nach einem der Ansprüche 7 bis 9, die einen Stickstoffzyklus umfasst.

## Claims

1. Method for producing an argon-rich stream from a mixture formed by a purge fluid in an ammonia production plant and containing hydrogen, methane, nitrogen and argon wherein:
i) the mixture is separated by at least one phase separator (7, 17) to produce at least a hydrogen-enriched gas and a hydrogen-depleted liquid
ii) at least one portion of the hydrogen-depleted liquid is sent to a separation element (21) to form an overhead gas and a bottoms liquid
iii) at least one portion of the bottoms liquid of the separation element is sent to a methane separation column (31) to produce a methane-enriched bottoms liquid and a methane-depleted overhead gas
iv) at least one portion of the methane-depleted overhead gas is sent to a nitrogen/argon separation column (41) to form a nitrogen-enriched fluid as overhead of said column and an argon-rich liquid as bottoms of said column serving as product
**characterised in that** the separation element is a methane scrubbing column, the bottoms liquid of the separation element sent to the methane separation column is a bottoms liquid of the methane scrubbing column,
the at least one portion of the hydrogen-depleted liquid is sent to the bottoms of the scrubbing column and at least one portion of the methane-enriched bottoms liquid is sent to the overhead of the methane scrubbing column.

2. Method according to claim 1 wherein the step i) comprises the separation of the mixture into at least two phase separators in series, the liquid from the first separator (7) being expanded and sent to the second separator (17) and the liquid from the second separator forming the supply fluid at the bottom of the methane scrubbing column (21), with each phase separator producing a hydrogen-enriched gas.

3. Method according to claim 2 wherein the first phase separator (7) produces a hydrogen-enriched gas at a pressure higher than the second phase separator (17).

4. Method according to one of the preceding claims wherein the methane-enriched liquid is pressurised upstream from the methane scrubbing column (21).

5. Method according to one of the preceding claims kept cold at least partially by a nitrogen cycle.

6. Method according to one of the preceding claims wherein the purge fluid is devoid of helium.

7. Device for the production of an argon-rich stream from a mixture formed by a purge fluid in an ammonia production plant and containing hydrogen, methane, nitrogen and argon comprising at least one phase separator (7, 17), a separation element (21), a methane separation column (31), a nitrogen/argon separation column (41), a line for sending the mixture into the at least one phase separator to produce at least a hydrogen-enriched gas and a hydrogen-depleted liquid, a line for sending at least a portion of the hydrogen-depleted liquid to the separation element (21) to form an overhead gas and a bottoms liquid, a line for sending at least one portion of the bottoms liquid of the separation element to the methane separation column to produce a methane-enriched bottoms liquid and a methane-depleted overhead gas, a line for sending at least one portion of the methane-depleted overhead gas to the nitrogen/argon separation column to form a nitrogen-enriched fluid as overhead of said column, a line for withdrawing an argon-rich liquid as bottoms of said column serving as product **characterised in that** the separation element is a methane scrubbing column, the line for sending at least one portion of the bottoms liquid of the separation element to the methane separation column is connected to the bottom of the methane scrubbing column
the line for sending at least one portion of the hydrogen-depleted liquid to the separation element is connected to the bottom of the methane scrubbing column and the device comprises a line for sending at least one portion of the methane-enriched bottoms liquid to the top of the methane scrubbing column.

8. Device according to claim 7 comprising at least two phase separators in series (7,17), a valve (9) for expanding the liquid from the first separator (7), a line for sending the liquid from the first separator to the valve, a line for sending the expanded liquid from the valve to the second separator (17) and a line for sending the liquid from the second separator forming the supply fluid at the bottom of the methane scrubbing column (21) and lines for withdrawing a hydrogen-enriched gas from each phase separator.

9. Device according to claim 7 or 8 comprising means for pressurising (33) the methane-enriched liquid upstream from the methane scrubbing column.

10. Device according to one of claims 7 to 9 comprising a nitrogen cycle.
